# EUROPÄISCHE PATENTSCHRIFT

(11) **EP 2 024 276 B1**
(45) Veröffentlichungstag und Bekanntmachung des Hinweises auf die Patenterteilung: **17.11.2010**
(21) Anmeldenummer: 07724814.4
(22) Anmeldetag: 03.05.2007
(51) Int. Cl.: C01B 3/36, F01N 3/20

(54) **BETRIEBSVERFAHREN FÜR EIN SYSTEM AUS EINEM REFORMER UND EINER KATALYTISCHEN ABGAS-NACHBEHANDLUNGSVORRICHTUNG**
OPERATING METHOD FOR A SYSTEM COMPOSED OF A REFORMER AND A CATALYTIC EXHAUST GAS AFTERTREATMENT DEVICE
PROCÉDÉ DE FONCTIONNEMENT POUR UN SYSTÈME CONSTITUÉ D'UN REFORMEUR ET D'UN DISPOSITIF DE POST-TRAITEMENT CATALYTIQUE DES GAZ D'ÉCHAPPEMENT

(30) Priorität: 03.06.2006 DE 102006026095; 26.10.2006 DE 102006050560
(43) Veröffentlichungstag der Anmeldung: 18.02.2009
(73) Patentinhaber: Bayerische Motoren Werke Aktiengesellschaft, 80809 München (DE)
(72) Erfinder: HUBER, Jochem, 80993 München (DE); PREIS,Michael, 86343 Königsbrunn (DE); RINGLER, Jürgen, 86438 Kissing (DE); LIEBL, Christian, 85386 Eching (DE)
(86) Internationale Anmeldenummer: PCT/EP2007/003888
(87) Internationale Veröffentlichungsnummer: WO 2007/140848

(56) Entgegenhaltungen:
- EP-A- 1 486 253
- EP-A- 1 522 697
- EP-A2- 1 231 183
- WO-A-2004/101965
- DE-A1- 10 127 199
- DE-A1-102005 030 474
- US-A1- 2005 274 104

## Beschreibung

Die Erfindung betrifft ein Betriebsverfahren für ein System bestehend aus einem Reformer, der im sog. Reformat-Modus zugeführten kohlenwasserstoffhaltigen Kraftstoff durch ein Reformierungsverfahren in ein wasserstoffreiches Reformatgas - insbesondere Wasserstoff, Kohlenmonoxid und Stickstoff aufweisend - umwandeln kann, sowie aus einer Brennkraftmaschine mit einer Abgasanlage mit einer katalytischen Abgas-Nachbehandlungsvorrichtung, welche zum beschleunigten Erreichen der Katalysator-Anspringtemperatur mit dem im Reformer erzeugten Gas beaufschlagt wird, wobei bei einem Kaltstart des Systems der Reformer nach seiner eigenen Startphase zunächst mit einem mageren Kraftstoff-Luft-Gemisch und somit nicht im Reformat-Modus sondern in einem sog. Lean-Burn-Modus betrieben wird. Zum Stand der Technik wird neben der DE 102 32 737 B4 auf die EP 1 231 183 A2 verwiesen.

Reformersysteme können bspw. in Kraftfahrzeugen eingesetzt sein, um aus flüssigen oder gasförmigen kohlenwasserstoffhaltigen Kraftstoffen (wie bspw. Benzin, Diesel, Alkoholen oder Methan oder Erdgas) ein wasserstoffreiches Synthesegas, bestehend aus Wasserstoff (H₂), Kohlenmonoxid (CO) und Inertgas (N₂, CO₂, H₂O) zu erzeugen. Je nach der neben dem Kohlenwasserstoff beteiligten Verbindung (O₂, H₂O, CO₂) sind unterschiedliche Reformierungsverfahren bekannt, nämlich die sog. partielle Oxidation, die Dampfreformierung, die CO₂-Reformierung, Cracken, oder auch Kombinationen hieraus, wie bspw. die sog. autotherme Reformierung.

Die partielle Oxidation, d.h. der sog. Reformat-Modus eines nach dem Reformerprinzip der partiellen Oxidation arbeitenden Reformers, verläuft exotherm. Um einen solchen Reformer jedoch in Gang zu setzen, wird üblicherweise zunächst ein Luftversorger betrieben, wonach eine erste Verbrennung vor einem im Reformer vorgesehenen Katalysator durchgeführt wird. Anschließend wird dieser Reformer-Katalysator mit "fettem" Kraftstoff-Luft-Gemisch (d.h. mit einem Gemisch mit unterstöchiometrischem Luftanteil, was einem Lambda-Wert kleiner "1" entspricht) beaufschlagt und damit weiter erwärmt, bis der Reformer seine Reformierungs-Betriebstemperatur erreicht hat. Dann arbeitet der Reformer im eigentlichen sog. Reformat-Modus mit unterstöchiometrischem, stark fettem Gemisch (mit Lambda-Werten in der Größenordnung von 0,3 bis 0,4) und einer systemabhängigen Reformierungstemperatur in der Größenordnung von 800°C bis 900°C. Bis zu diesem Zeitpunkt entstehen jedoch nicht zu vernachlässigende Abgasemissionen.

Reformersysteme können entweder in Kombination mit Brennstoffzellen oder auch alleine bspw. in Kraftfahrzeugen eingesetzt werden. Dabei sind zahlreiche Einsatz- und Nutzungsmöglichkeiten für das im Reformat-Modus gewonnene sog. Reformatgas bekannt, so bspw. für den Betrieb einer Brennstoffzelle, oder für die Zufuhr zu einer als Fzg.-Antriebsaggregat fungierenden Brennkraftmaschine zur Minimierung der Kaltstart-/Warmlauf- und Rohemissionen derselben, daneben auch zum Aufheizen einer katalytischen Abgas-nachbehandlungsvorrichtung, insbesondere für die Abgase der genannten Brennkraftmaschine, oder direkt für die Nachbehandlung des Brennkraftmaschinen-Abgases, bspw. in NOₓ-Adsorbern oder Partikelfiltern.

Eine katalytische Abgas-Nachbehandlungsvorrichtung kann ihre Funktion, nämlich die Umwandlung von CO, HC und/oder NOₓ zu CO₂, H₂O und/oder N₂ nur erfüllen, wenn der auch sog. Abgas-Katalysator seine sog. Anspringtemperatur erreicht bzw. überschritten hat. Um diesen Zustand ausgehend von einem Kaltstart einer genannten Brennkraftmaschine sowie der zugehörigen katalytischen Abgas-Nachbehandlungsvorrichtung (= "Abgas-Katalysator") baldmöglichst zu erreichen, sind verschiedene Maßnahmen bekannt. Neben einer gezielten Beeinflussung der Verbrennung in der Brennkraftmaschine im Sinne eines erhöhten Abgasmassenstroms und/oder vergrößerten Wärmestroms im Abgas sowie exothermen Nachreaktionen im Abgasstrang kann der Abgas-Katalysator auch durch externe Zufuhr von elektrischer Energie erhitzt werden.

Bekanntlich hängt die Höhe der sog Anspringtemperatur des Katalysators einer Abgas-Nachbehandlungsvorrichtung von verschiedenen Parametern ab. So zum einem vom Aufbau des Katalysators selbst, d.h. von dessen Substrat, Zellenzahl, Wärmekapazität, Edelmetall-Komponenten, Edelmetallbeladung, etc., ferner von dessen Alterungszustand, daneben vom Sauerstoffanteil im zu konvertierenden Abgasstrom und darüber hinaus direkt von der Zusammensetzung des zu konvertierenden Abgases. In diesem Zusammenhang ist es bekannt, dass mit Hilfe von in einem Reformer erzeugten Reformat-Gas eine katalytische Abgas-Nachbehandlungsvorrichtung aufgeheizt werden kann. Der Vorteil einer Katalysator-Aufheizung mit Reformat-Gas (bzw. die Unterstützung der Katalysator-Aufheizung mit Reformat-Gas) liegt im Vergleich zur konventionellen Aufheizung in der Steigerung des Wasserstoffanteils und des Kohlenmonoxids-Anteils, aufgrund dessen bzw. derer die katalytische Konvertierung der Schadstoffe bereits bei niedrigeren Temperaturen (in der Größenordnung von 150°C bis 180°C) einsetzt. Vorteilhafterweise wird durch die direkte Konvertierung von Wasserstoff und Kohlenmonoxid an der aktiven Katalysator-Oberfläche die Wärme exakt dort frei gesetzt, wo sie für die katalytische Wirkung benötigt wird. Es findet sozusagen eine direkte, interne Aufheizung der Katalysator-Oberfläche statt im Gegensatz zu einer externen ineffizienten Wärmezufuhr über komplexe Wärmeübergänge, wobei erhebliche Übertragungsverluste auftreten. Zugleich wird dem Katalysator durch das zugeführte Reformat-Gas eine die Aufheizung unterstützende vergrößerte Wärmeenergie zur Verfügung gestellt.

Jedoch existiert während der Aufheizphase einer katalytischen Abgas-Nachbehandlungsvorrichtung, welcher in einem Reformer erzeugtes Reformat-Gas zur Verkürzung dieser Aufheizphase zugeführt wird, trotz der relativ niedrigen Konvertierungstemperatur von Wasserstoff und Kohlenmonoxid ein Zeitfenster, in welchem Kohlenmonoxid unkonvertiert durch den Abgas-Katalysator in die Umgebung gelangen kann, nämlich bis zu dem Zeitpunkt, ab dem der Katalysator zu einer signifikanten Konvertierung von Kohlenmonoxid in der Lage ist. Kohlenmonoxid und andere Gaskomponenten (Wasserdampf, Kohlenwasserstoff-Radikale, etc.) blockieren bis zu diesem Zeitpunkt nämlich die aktiven Zentren des Katalysators, so dass die Konvertierung auch aller anderen Abgaskomponenten - insbesondere von Wasserstoff - bis zum genannten Zeitpunkt nicht im signifikanten Umfang stattfindet. Da Reformat-Gas, das im Reformat-Modus in einem Reformer erzeugt wurde, circa 24% Kohlenmonoxid enthält, sind außerdem vorgegebene strenge, praktisch weltweit gültige Abgasgrenzwerte für Kraftfahrzeuge, nicht einhaltbar.

Aus der eingangs genannten EP 1 231 183 A2 ist ein Betriebsverfahren für ein System aus einem Reformer sowie aus einer katalytischen Abgas-Nachbehandlungsvorrichtung, welche zum beschleunigten Erreichen der Katalysator-Anspringtemperatur mit dem im Reformer erzeugten Gas beaufschlagt wird, bekannt, wobei bei einem Kaltstart des Systems der Reformer nach seiner eigenen Startphase zunächst mit einem mageren Kraftstoff-Luft-Gemisch und somit nicht im Reformat-Modus sondern in einem sog. Lean-Burn-Modus betrieben wird. Ein solcher Lean-Burn-Modus, der auch als "Magerverbrennungs-Modus" bezeichnet werden kann, stellt sich als Verbrennung von überstöchiometrischem Gemisch, was einem Lamda-Wert größer "1" entspricht, dar. An dieser Stelle sei ausdrücklich darauf hingewiesen, dass unter dem Begriff "Kaltstart" jeder Start bzw. Anfahrvorgang eines erfindungsgemäßen Systems verstanden wird, bei dem der Katalysator der Abgas-Nachbehandlungsvorrichtung eine niedrigere Temperatur als seine Anspringtemperatur (oder Konvertierungstemperatur) besitzt, so dass eine erfolgreiche Konvertierung schädlicher Abgasbestandteile im Abgas-Katalysator nicht stattfinden kann.

Wie ein derartiges bekanntes System, welches weiterhin eine Brennkraftmaschine und somit die grundsätzlich bekannten Merkmale des Oberbegriffs des Anspruchs 1 der vorliegenden Erfindung enthält, in seiner Gesamtheit ideal betrieben werden kann, soll hiermit aufgezeigt werden (= Aufgabe der vorliegenden Erfindung). Gelöst wird diese Aufgabe durch die Merkmale im kennzeichnenden Teil des Anspruchs 1.

Demnach wird die Brennkraftmaschine während des Reformerbetriebs im Lean-Burn-Modus solchermaßen betrieben, dass brennbare Bestandteile des Abgases der Brennkraftmaschine in deren Abgasanlage mit dem stromauf der darin vorgesehenen Abgas-Nachbehandlungsvorrichtung zugeführten vom Reformer erzeugten heißen Gas reagieren können, wobei jedenfalls über einen gewissen Zeitabschnitt der durch den Katalysator der Abgas-Nachbehandlungsvorrichtung hindurch geführte Summen-Abgasstrom aus dem im Reformer erzeugten Gas und dem Abgas der Brennkraftmaschine im wesentlichen die Zusammensetzung eines aus der Verbrennung eines stöchiometrischen Gemischs entstandenen Abgases aufweist. (Diesbezüglich wird eine mit Direkteinspritzung betriebene fremdgezündete Brennkraftmaschine etwas anders betrieben als eine nicht mit Kraftstoff-Direkteinspritzung arbeitende Brennkraftmaschine). Ferner können während der genannten Aufheizphase die von der Brennkraftmaschine emittierten Kohlenwasserstoffe (HC) in einem der Abgas-Nachbehandlungsvorrichtung vorgeschalteten HC-Adsorber zwischengespeichert werden.

Zurückkommend auf die Merkmale des Patentanspruchs 1 ist vorgeschlagen, den Reformer dadurch emissionsarm zu starten, indem man ihn nach der Einleitung einer ersten Verbrennung vor dem Reformer-Katalysator für einen gewissen Zeitraum mit magerem Kraftstoff-Luft-Gemisch, d.h. in einem sog. "Lean-Burn-Modus" oder als sog. Magergemisch-Brenner betreibt. Somit werden während der damit weiterhin stattfindenden Erwärmung des Reformer-Katalysators, die im üblichen Stand der Technik mit fettem Kraftstoff-Luft-Gemisch durchgeführt wird, signifikant weniger Emissionen, insbesondere von Kohlenwasserstoffen und Kohlenmonoxid, produziert. Vorteilhafterweise kann die in diesem "Lean-Burn-Modus" entstehende Verbrennungswärme einfach über die Zusammensetzung des dem Reformer zugeführten Gemischs und den dem Reformer zugeführten Luftmassenstrom eingestellt bzw. geregelt werden und wird durch entsprechende Führung des so gewonnenen Reformer-Gases insbesondere auch der katalytischen Abgas-Nachbehandlungsvorrichtung zur Erwärmung zugeführt, wobei der vom Reformer für die Aufheizung des Abgas-Katalysators zur Verfügung gestellte Wärmestrom bedarfsgerecht eingestellt werden kann. Es kann also mit dem heißen im Reformer erzeugten Gas aus dem "Lean-Burn-Modus" ein ausreichend großes Teilvolumen des Abgas-Katalysators schnellstmöglich auf die Anspring- oder Konvertierungstemperatur gebracht werden, wobei vorzugsweise der maximal mögliche Reformat-Massenstrom, den der als Magergemisch-Brenner betriebene Reformer in seinem "Lean-Burn-Modus" bereit stellen kann, zu nutzen ist.

In diesem Sinne wird der Reformer bevorzugt also solange im genannten Lean-Burn-Modus betrieben, bis in der katalytischen Abgas-Nachbehandlungsvorrichtung die zugeführten brennbaren Komponenten eigenständig mit ausreichender Sicherheit oxidiert werden können, d.h. bis der Abgas-Katalysator seine Anspringtemperatur erreicht bzw. überschritten hat. Danach kann der Reformer auf die übliche Betriebsweise des Reformat-Modus umgeschaltet werden.

Im übrigen kann im sog. Lean-Burn-Modus zumindest ein Teil derjenigen Ablagerungen, die sich im Reformer während dessen Betrieb im Reformat-Modus bilden, abgebrannt und somit entfernt werden. Die Durchführung des hier vorgeschlagenen Lean-Burn-Modus hat somit für den Reformer den vorteilhaften Effekt, dass dieser von Ablagerungen befreit wird. In diesem Sinne kann der Reformer auch im Lean-Burn-Modus betrieben werden, um Ablagerungen aus einem vorhergehenden Reformat-Modus innerhalb des Reformers zu oxidieren, wobei die Betriebsweise des Reformers vom Lean-Burn-Modus auf den Reformat-Modus umgeschaltet wird, sobald solche Ablagerungen zumindest erfahrungsgemäß im wesentlichen oxidiert sind. Dabei kann der Lean-Burn-Modus für eine gewisse Zeitspanne aufrecht erhalten werden, während derer erfahrungsgemäß vorhandene Ablagerungen im Reformer im wesentlichen abgebrannt werden; es ist aber auch möglich, das Vorhandensein signifikanter Ablagerungen geeignet zu ermitteln oder zu messen und den Lean-Burn-Modus dann solange zu betrieben, bis keine signifikanten Ablagerungen mehr feststellbar sind.

Der bevorzugte Anwendungsfall eines erfindungsgemäßen Systems liegt wie bereits erwähnt im Kraftfahrzeugbereich in Verbindung mit einer Brennkraftmaschine als Fahrzeug-Antriebsaggregat. Deren nach einem Kaltstart zunächst noch relativ kalter Abgasstrom wird nun während des Lean-Burn-Modus des Reformers in der Abgasanlage der Brennkraftmaschine der im Reformer erzeuge heiße Gasstrom, der noch freien Sauerstoff enthält, stromauf der katalytischen Abgas-Nachbehandlungsvorrichtung beigemengt, so dass dort die brennbaren Bestandteile des Brennkraftmaschinen-Abgases nachverbrannt werden können. Vorzugsweise wird dabei relativ kaltes, moderat fettes Abgas der Brennkraftmaschine mit dem heißen und mageren im Reformer erzeugten Gas so in der Abgasanlage des Systems stromauf des Abgas-Katalysators der Abgas-Nachbehandlungsvorrichtung gemischt, so dass sich dort ein gewünschtes Gesamt-Kraftstoff-Luftverhältnis einstellt. Einerseits kann sich damit in der Abgasanlage eine gewünschte Nachverbrennung einstellen, wobei die Exothermie dieser Konvertierung zusätzlich zur Wärmeenergie des Gases aus dem Reformer zur Erwärmung des Abgas-Katalysators genutzt werden kann. Für eine schnelle Aufheizung des Abgas-Katalysators (d.h. der katalytischen Abgas-Nachbehandlungsvorrichtung) günstige hohe Temperaturen werden dabei dann erzeugt, wenn der durch den Abgas-Katalysator hindurch geführte Summen-Abgasstrom aus dem im Reformer erzeugten Gas und dem Abgas der Brennkraftmaschine im wesentlichen die Zusammensetzung eines aus der Verbrennung eines stöchiometrischen Gemischs (Lambda-Wert im wesentlichen gleich "1") entstandenen Abgases aufweist. Auf diese Weise ergeben sich für den Abgas-Katalysator quasi mehrere Wärmequellen, nämlich die direkte Wärmezufuhr über das im Reformer gewonnene warme Gas sowie über die Nachverbrennung des fetten, noch brennbare Kraftstoff-Bestandteile enthaltenden Brennkraftmaschinen-Abgases.

Vorteilhafterweise kann ein entsprechend zusammengesetzter Summen-Abgasstrom, nämlich im wesentlichen in der Zusammensetzung eines aus der Verbrennung eines stöchiometrischen Gemischs entstandenen Abgases, in einem Drei-Wege-Katalysator mit Erwärmung desselben bestmöglich nachbehandelt werden, d.h. es können die darin enthaltenen schädlichen Abgasbestandteile mit dieser Abgas-Zusammensetzung bestmöglich konvertiert werden, insbesondere da das Erreichen der Konvertier-Fähigkeit des Abgas-Katalysators keine Sprungfunktion darstellt, so dass mit einer gezielten Einstellung des Kraftstoff-Luftverhältnisses auch bereits eine teilweise Konvertierung in einem üblichen Dreiwege-Katalysator erreicht werden.

In diesem Sinne kann also eine fremdgezündete, nicht mit Kraftstoff-Direkteinspritzung arbeitende Brennkraftmaschine (bei einer solchen wird der Kraftstoff dem zugeführten Verbrennungs-Luftstrom außerhalb der Brennräume hinzugefügt) während des Reformerbetriebs im Lean-Burn-Modus (und somit während der Aufheizphase der Abgas-Nachbehandlungsvorrichtung) zunächst mit einem derartigen moderat fettem Kraftstoff-Luft-Gemisch betrieben werden, dass sich die genannte Zusammensetzug des Summen-Abgasstromes aus Brennkraftmaschinen-Abgas und Reformer-Gas einstellt. Die Zusammensetzung des der Brennkraftmaschine zugeführten Gemisches kann dabei auch hinsichtlich des motorischen Fahrkomforts abgestimmt werden. Vorteilhafterweise kann dann auf die üblichen, den Kraftstoffverbrauch erhöhenden Heizmaßnahmen für den Abgas-Katalysator weitestgehend verzichtet werden, wobei jedoch zur Beschleunigung der weiteren Aufheizung des Abgas-Katalysators derartige Maßnahmen abgeschwächt noch vorgesehen sein können. Gleiches gilt selbstverständlich auch für mit Kraftstoffdirekteinspritzung betriebene Brennkraftmaschinen. Für diese wird vorgeschlagen, die Brennkraftmaschine während des Reformerbetriebs im Lean-Burn-Modus mit vermehrtem Kraftstoff zu versorgen, der vorzugsweise auf der Weg der bekannten Kraftstoff-Nacheinspritzung in die Brennräume der Brennkraftmaschine eingebracht werden kann. Dieser vermehrte Kraftstoff-Eintrag in den oder die Brennräume einer mit Kraftstoffdirekteinspritzung betriebenen Brennkraftmaschine erfolgt vorzugsweise dann, wenn in oder in Abgas-Strömungsrichtung betrachtet vor der genannten Abgas-Nachbehandlungsvorrichtung dieser zusätzliche Kraftstoff bzw. die in der Brennkraftmaschine daraus entstandenen Produkte umgesetzt werden kann bzw. können.

Nach einer gewissen Zeitspanne, insbesondere wenn die Temperatur des Abgas-Katalysators oberhalb seiner sog. Anspringtemperatur für die Konvertierung von Kohlenmonoxid und/oder oberhalb der Anspringtemperatur oder Desorptions-Temperatur für andere (gespeicherte) Gaskomponenten liegt, und die ausgehend von einem Kaltstart des Systems beispielsweise in der Größenordnung von 10 Sekunden liegen kann, und/oder sobald die Brennkraftmaschine mit moderat magerem Kraftstoff-Luft-Gemisch betrieben werden kann, wird nicht nur die Brennkraftmaschine mit entsprechendem moderat magerem Gemisch betrieben, sondern es wird dann auch der Betriebsmodus des Reformers gewechselt, d.h. dann wird der sog. "Lean-Burn-Modus" beendet und der Reformer wird anschließend im üblichen Reformat-Modus betrieben, in dem übliches Reformat-Gas (insbesondere H₂ und CO) erzeugt wird. Ab diesem Zeitpunkt wird dann über die direkte katalytische Konvertierung von an Wasserstoff reichem Synthesegas aus dem Reformer die direkte Wärmefreisetzung im Abgas-Katalysator eingeleitet. Der angeforderte Reformat-Massenstrom kann dabei in Abhängigkeit vom zur Verfügung stehenden Sauerstoff-Massenstrom, dem Abgasmassenstrom der Brennkraftmaschine, dem gewünschten Gesamt-Abgaslambda, etc. gesteuert bzw. geregelt werden, wobei jedenfalls bei Verwendung eines Drei-Wege-Katalysators vorzugsweise wiederum ein solcher Lambda-Wert im Summen-Abgasstrom eingestellt wird, der im wesentlichen der Zusammensetzung eines aus der Verbrennung eines stöchiometrischen Gemischs (Lambda-Wert im wesentlichen gleich "1") entstandenen Abgases entspricht.

Im Sinne einer vorteilhaften Weiterbildung können zumindest während des Reformerbetriebs im Lean-Burn-Modus bzw. während der Aufheizphase des Abgas-Katalysators die von der Brennkraftmaschine emittierten Kohlenwasserstoffe in einem dem Abgas-Katalysator und vorzugsweise auch der Einblasestelle des Reformat-Gases in die Abgasanlage strömungstechnisch vorgeschalteten Kohlenwasserstoff-Adsorber - zwischengespeichert werden. Zu einem späteren Zeitpunkt, insbesondere nachdem der Abgas-Katalysator seine Konvertierungstemperatur erreicht hat, können diese dann wieder desorbiert werden. Weiterhin ist es zwar grundsätzlich bekannt, irgendwelche vorzugsweise stromab des Abgas-Katalysators in der Abgasanlage der Brennkraftmaschine verbauten Einheiten insbesondere zur Abgas-Behandlung, bei denen es sich bspw. um einen NOₓ-Speicher-Katalysator oder ein Partikelfilter handeln kann, durch Inbetriebnahme eines ohnehin bereits vorgesehenen Reformers und damit verbundene Zuführung von Reformat-Gas zu regenerieren. Auch kann damit eine aus irgendwelchen Gründen abgekühlte Abgas-Nachbehandlungsvorrichtung wieder auf ihre Betriebstemperatur bzw. Anspringtemperatur gebracht werden. Entsprechendes ist auch in Verbindung mit einem erfindungsgemäßen Betriebsverfahren möglich, und zwar indem der Reformer bei Inbetriebnahme zumindest zunächst im genannten Lean-Burn-Modus betrieben wird. Im übrigen kann der Lean-Burn-Modus auch im Hinblick auf eine Erwärmung des Reformers selbst gewählt werden, derart, dass die Betriebsweise des Reformers vom Lean-Burn-Modus auf den Reformat-Modus umgeschaltet wird, wenn der Reformer selbst soweit aufgewärmt ist, dass er im Reformat-Modus emissionsarm betrieben werden kann. Der Begriff "emissionsarm" ist dabei so verstehen, dass Im Reformat-Modus mit einer solchen vorherigen Erwärmung über den Betrieb im Lean-Burn-Modus nennenswert geringere Schadstoffemissionen festzustellen sind, als dies bei einem Betrieb im Reformat-Modus ohne vorherige Erwärmung durch den Lean-Burn-Modus der Fall wäre.

In den beigefügten Figurendarstellungen sind die zeitlichen Verläufe verschiedener kennzeichnender Größen über identischen Zeitachsen dargestellt, die sich bei einer bevorzugten Durchführung des erfindungsgemäßen Betriebsverfahrens einstellen (können), und zwar in der Figurenfolge A für eine fremdgezündete, nicht mit Direkteinspritzung betriebene Brennkraftmaschine und in der Figurenfolge B für eine mit Direkteinspritzung betriebene fremdgezündete Brennkraftmaschine. In den einzelnen Figurenfolgen A bzw. B zeigen die einzelnen Figuren folgendes :
In der jeweils obersten Figur A1 bzw. B1 ist der Lambda-Wert (λ_{Abgas},_{ges}) des gesamten Abgasstromes, d.h. des zusammengeführten Abgases der Brennkraftmaschine und des im Reformer gewonnenen Gases über der Zeit dargestellt,
in der zweiten Figur A2 bzw. B2 der Lambda-Wert (λ_{Motor}) des der Brennkraftmaschine zugeführten Gemisches,
in Figur A3 bzw. B3 der der Brennkraftmaschine zugeführte Luftmassenstrom m_{Motor}.
in der Figur A4 bzw. B4 der Lambda-Wert (λ_{Ref}) des dem Reformer zugeführten Kraftstoff-Luftgemisches, sowie
in der untersten Figur A5 bzw. B5 der dem Reformer zugeführte Luftmassenstrom m_{Ref}.

Die verschiedenen Phasen bzw. Betriebsarten, in denen der Reformer erfindungsgemäß betrieben wird, sind in der Figurenfolge A dabei mit arabischen Ziffern (in Fig.A4) und in der Figurenfolge B mit römischen Ziffern (in Fig.B3) gekennzeichnet.

Zunächst auf die Figurenfolge A Bezug nehmend erhält in Phase 1 der Reformer anschließend an einen Kaltstart äußerst kurzzeitig zunächst ein fettes Gemisch (Lambda kleiner "1"), um den im Reformer vorgesehenen Katalysator zu starten. Anschließend, in Phase 2, kann der Reformer leicht mager, d.h. mit einem Lambda-Wert nur geringfügig größer als "1,0" betrieben werden, um die Aufheizung des Reformers zu forcieren, wobei in diesem kurzen Zeitraum anschließend an einen Kaltstart noch keine Überhitzungsprobleme auftreten können. Dabei kann die Brennkraftmaschine mit moderat fettem Gemisch (Lambda kleiner als "1,0") betrieben werden, was der Laufruhe förderlich ist, wobei die Einstellung aller Parameter (d.h. der jeweiligen Luftmassen- und Kraftstoffmassen-Zufuhr) bereits so gewählt wird, dass sich im Gesamt-Abgasstrom ein Lambda-Wert von im wesentlichen "1,0" einstellt.

In der anschließenden Phase 3 kann die Brennkraftmaschine mit etwas weniger fettem Gemisch als in Phase 2, aber immer noch einem Lambda-Wert kleiner "1,0" betrieben werden, wobei der Reformer mit geringerem Massenstrom und erheblich magererem Gemisch (Lambda wesentlich größer als "1,0") betrieben wird, um Überhitzungsprobleme im Reformer zu vermeiden. Insbesondere in dieser Betriebs-Phase bzw. Betriebsweise, die hier als Lean-Burn-Modus bezeichnet wird, wird das noch brennbare Kraftstoffbestandteile enthaltende Abgas der Brennkraftmaschine in der Abgasanlage stromauf des Katalysators durch die Beimengung des im Reformer erzeugten heißen Gases, welches aufgrund des Magerbetriebs des Reformers noch freien Rest-Sauerstoff enthält, nach verbrannt. Die dabei freiwerdende Wärme steht vollständig für die Aufheizung des Abgas-Katalysators zur Verfügung.

Schließlich wird in Phase 4, wenn die Temperatur des Abgas-Katalysators signifikant über dessen Anspringtemperatur für die einzelnen Abgaskomponenten liegt und wenn die Brennkraftmaschine mit gering magerem Gemisch betrieben werden kann, im Reformer auf den eigentlichen Reformat-Modus übergegangen, in welchem der Reformer mit sehr fettem Gemisch (Lambda erheblich kleiner als "1,0") betrieben wird. Schließlich - im Anschluss an Phase 4 und mit vollständiger Erwärmung der Abgasanlage der Brennkraftmaschine - kann der Reformer abgeschaltet werden (m_{Ref} = 0; vgl. Fig. A5).

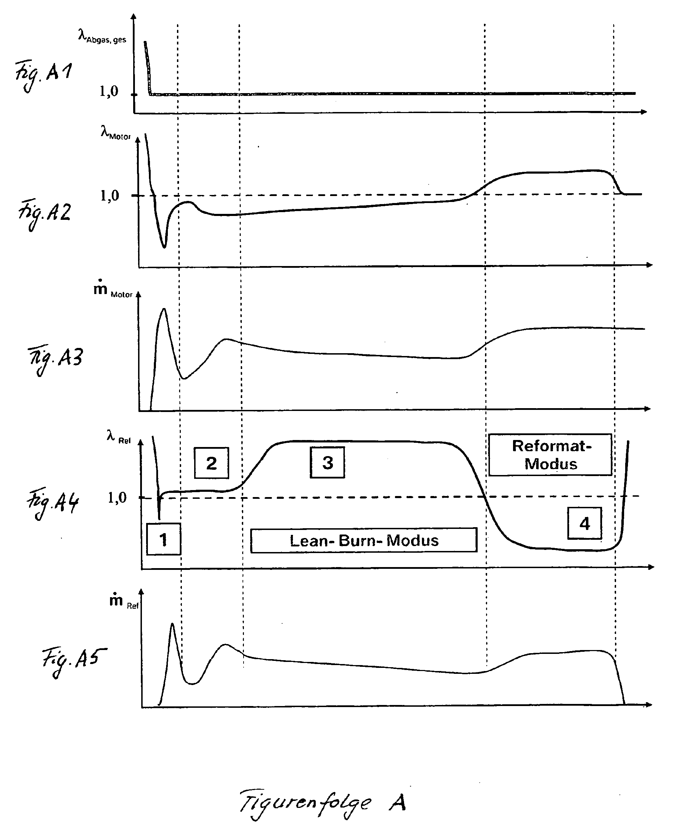

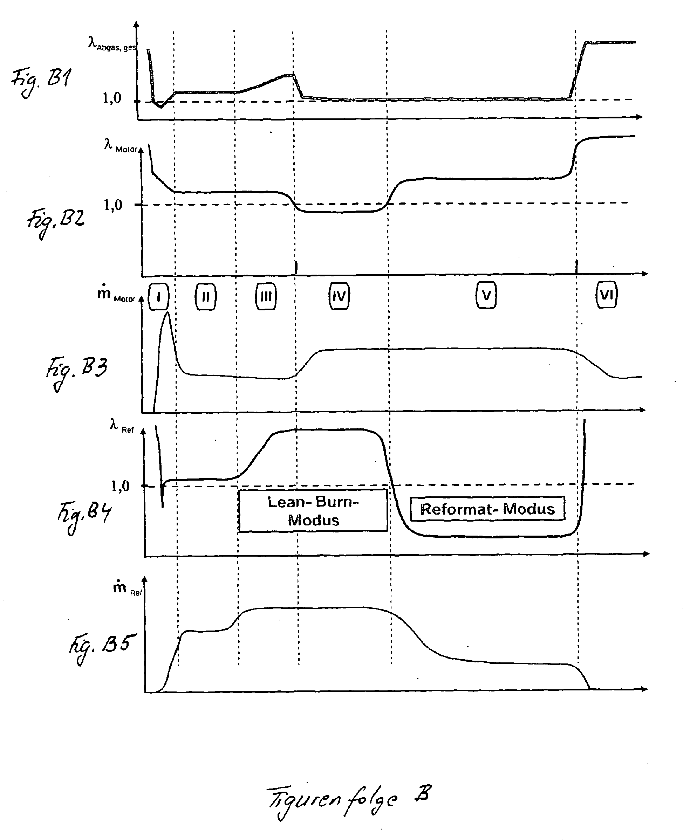

Mit Ausnahme eines Peaks zu Beginn dieses gesamten Prozesses stellt sich dabei im Summen-Abgasstrom (Fig.1) stets (praktisch konstant) ein Lambda-Wert von im wesentlichen gleich "1,0" ein. Auf diese Weise sind optimale Konvertierungsverhältnisse im Dreiwege-Abgaskatalysator gewährleistet. Als Regelparameter dienen dabei insbesondere der dem Reformer zugeführte Luftmassenstrom sowie die dem Reformer zugeführte Kraftstoff-Luft-Gemisch-Zusammensetzung.

Im weiteren auf die Figurenfolge B Bezug nehmend handelt es sich bei der Phase I um die Startphase des Reformers (analog Phase 1 der Figurenfolge A) sowie der Brennkraftmaschine, wobei diese ggf. mit magerem Gemisch gestartet werden kann und in der sog. Nachstart-Phase II mager geschichtet betrieben werden kann. Hierbei wird vorzugsweise auf geringe Rohstoff-Emissionen der Brennkraftmaschine geachtet, während der Reformer zur schnelleren Aufheizung ebenfalls emissionsarm mit einem Lambda-Wert nahe = 1 betrieben wird, mit dem Ziel, sobald als möglich einen maximalen Wärmestrom stromauf des Abgas-Katalysator in die Abgasanlage der Brennkraftmaschine einzuleiten.

Sobald der Reformer seine (maximale) Betriebstemperatur erreicht hat, wird dieser im sog. Lean-Burn-Modus betrieben, d.h. in dieser Phase III wird ein möglichst großer Lambda-Wert am Reformer eingestellt, wodurch auch Überhitzungsprobleme vermieden werden können. In dieser Phase III kann - solange die Anspringtemperatur des Abgas-Katalysators noch nicht erreicht ist - der Lambda-Wert des gesamten Abgasstromes (vgl. Fig.B1) moderat mager eingestellt werden, um optimale Konvertierungsbedingungen im Abgas-Katalysator zu schaffen. Nach Überschreiten der Anspringtemperatur des Abgaskatalysators kann die Brennkraftmaschine in Phase IV mit Kraftstoff-Nacheinspritzung betrieben werden, insbesondere um einen maximalen Wärmestrom zur gesteigerten Aufheizung der Abgasanlage und insbesondere des darin vorgesehenen Abgas-Katalysators zu erzielen. Dabei wird der Reformer noch im Lean-Burn-Modus betrieben, so dass sich nun im Summen-Abgasstrom ein Lambda-Wert von annähernd "1" einstellt.

Sobald der Abgas-Katalysator seine Anspringtemperatur erreicht hat bzw. diese geringfügig überschritten ist, so dass sichergestellt ist, dass in der katalytischen Abgas-Nachbehandlungsvorrichtung zugeführte brennbare Komponenten eigenständig mit ausreichender Sicherheit oxidiert werden können, wird der Reformer vom Lean-Burn-Modus auf den eigentlichen Reformat-Modus umgestellt; in dieser Phase V können die Nacheinspritzungen von Kraftstoff in die Brennräume der Brennkraftmaschine moderat reduziert werden. Vorzugsweise wird der Lambdawert des Summen-Abgasstromes dabei im wesentlichen auf den Wert "1" eingestellt, insbesondere um eine weiter starke Aufheizung der Abgasanlage und des Abgas-Katalysators zu erzielen. In der anschließenden Phase VI schließlich wird der Reformer abgeschaltet (m_{Ref} = 0; vgl. Fig. B5) und die Brennkraftmaschine arbeitet im üblichen Schichtbetrieb.

Ohne Bezugnahme auf ein spezielles Ausführungsbeispiel kann mit dem vorgeschlagenen Betriebsverfahren eine katalytische Abgas-Nachbehandlungsvorrichtung unter Einhaltung der gesetzlich vorgeschriebenen Emissionsgrenzwerte derart schnell auf ihre Anspringtemperatur bzw. Betriebs- oder Konvertierungstemperatur gebracht werden, dass dieser Abgas-Katalysator auch weiter von der Brennkraftmaschine entfernt als bislang üblich in der Abgasanlage eingebaut werden kann, wodurch sich mehrere Vorteile ergeben. Zum einen stellt sich dadurch ein geringerer Abgasgegendruck ein, ferner ein reduzierter Kraftstoffverbrauch, da die bislang weit verbreitete, dem Fachmann bekannte sog. Volllast-Anreicherung erheblich reduziert werden kann. Es kann auch die Edelmetall-Menge der KatalysatorBeschichtung sowie die Zellenzahl der Katalysator-Monolithen aufgrund der somit verringerten thermischen Alterung reduziert wwerden, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Betriebsverfahren für ein System bestehend aus einem Reformer, der im sog. Reformat-Modus zugeführten kohlenwasserstoffhaltigen Kraftstoff durch ein Reformierungsverfahren in ein wasserstoffreiches Reformat-Gas umwandeln kann, sowie einer Brennkraftmaschine mit einer Abgasanlage mit einer katalytischen Abgas-Nachbehandlungsvorrichtung, welche zum beschleunigten Erreichen der Katalysator-Anspringtemperatur mit dem im Reformer erzeugten Gas beaufschlagt wird, wobei bei einem Kaltstart des Systems der Reformer nach seiner eigenen Startphase zunächst mit einem mageren Kraftstoff-Luft-Gemisch und somit nicht im Reformat-Modus sondern in einem sog. Lean-Burn-Modus betrieben wird,
**dadurch gekennzeichnet, dass** die Brennkraftmaschine während des Reformerbetriebs im Lean-Burn-Modus solchermaßen betrieben wird, dass brennbare Bestandteile des Abgases der Brennkraftmaschine in deren Abgasanlage mit dem stromauf der Abgas-Nachbehandlungsvorrichtung zugeführten vom Reformer erzeugten heißen Gas reagieren können, wobei
(a) eine fremdgezündete, nicht mit Kraftstoff-Direkteinspritzung betriebene Brennkraftmaschine während des Reformerbetriebs im Lean-Burn-Modus mit moderat fettem Kraftstoff-Luftgemisch betrieben wird und der durch den Katalysator der Abgas-Nachbehandlungsvorrichtung hindurch geführte Summen-Abgasstrom aus dem im Reformer erzeugten Gas und dem Abgas der Brennkraftmaschine im wesentlichen die Zusammensetzung eines aus der Verbrennung eines stöchiometrischen Gemischs entstandenen Abgases aufweist, während
(b) bei einer mit Kraftstoff-Direkteinspritzung betriebenen fremdgezündeten Brennkraftmaschine eine solche stöchiometrische Zusammensetzung des Summen-Abgasstroms durch Kraftstoff-Nacheinspritzung erst dann eingestellt wird, wenn die in der Brennkraftmaschine aus diesem zusätzlichen Kraftstoff entstandenen Produkte in oder vor der Abgas-Nachbehandlungsvorrichtung umgesetzt werden können.

2. Betriebsverfahren nach Anspruch 1,
**dadurch gekennzeichnet, dass** die Betriebsweise des Reformers vom Lean-Burn-Modus auf den Reformat-Modus umgeschaltet wird, sobald in der katalytischen Abgas-Nachbehandlungsvorrichtung zugeführte brennbare Komponenten eigenständig mit ausreichender Sicherheit oxidiert werden können.

3. Betriebsverfahren nach einem der vorangegangenen Ansprüche,
**dadurch gekennzeichnet, dass** zumindest während des Reformerbetriebs im Lean-Burn-Modus die von der Brennkraftmaschine emittierten Kohlenwasserstoffe in einem der Abgas-Nachbehandlungsvorrichtung vorgeschalteten HC-Adsorber zwischengespeichert werden.

4. Betriebsverfahren nach einem der vorangegangenen Ansprüche,
**dadurch gekennzeichnet, dass** zur Regeneration oder zur Erhöhung der Temperatur einer in der Abgasanlage vorgesehenen Einheit der Reformer in Betrieb genommen und dabei zumindest zunächst im Lean-Burn-Modus betrieben wird.

5. Betriebsverfahren nach einem der vorangegangenen Ansprüche,
**dadurch gekennzeichnet, dass** der Reformer im Lean-Burn-Modus betrieben wird, um Ablagerungen aus einem vorhergehenden Reformat-Modus im Reformer zu oxidieren und dass die Betriebsweise des Reformers vom Lean-Burn-Modus auf den Reformat-Modus umgeschaltet wird, sobald solche Ablagerungen zumindest erfahrungsgemäß im wesentlichen oxidiert sind.

6. Betriebsverfahren nach einem der vorangegangenen Ansprüche,
**dadurch gekennzeichnet, dass** die Betriebsweise des Reformers vom Lean-Burn-Modus auf den Reformat-Modus umgeschaltet wird, wenn der Reformer selbst soweit aufgewärmt ist, dass er im Reformat-Modus emissionsarm betrieben werden kann.

## Claims

1. An operating method for a system, comprising a reformer, which, in the so-called reformate mode, can convert supplied hydrocarbon-containing fuel into a hydrogen-rich reformate gas by a reforming method, and an internal combustion engine with an exhaust gas system with a catalytic exhaust gas aftertreatment device, which is loaded with the gas produced in the reformer for the accelerated reaching of the catalytic converter light-off temperature, wherein, during a cold start of the system, the reformer, after its own starting phase, is firstly operated with a lean fuel/air mixture and therefore not in the reformate mode, but in a so-called lean-burn mode, **characterised in that** the internal combustion engine is operated during reformer operation in the lean-burn mode in such a way that combustible constituents of the exhaust gas of the internal combustion engine in the exhaust gas system thereof can react with the hot gas produced by the reformer and supplied upstream of the exhaust gas aftertreatment device, wherein
(a) a spark-ignited internal combustion engine not operated by direct fuel injection is operated during the reformer operation in the lean-burn mode with a moderately rich fuel/air mixture and the cumulative exhaust gas flow guided through the catalytic converter of the exhaust gas aftertreatment device from the gas produced in the reformer and the exhaust gas of the internal combustion engine substantially has the composition of an exhaust gas produced from the combustion of a stoichiometric mixture, while
(b) in a spark-ignited internal combustion engine operated with direct fuel injection, a stoichiometric composition of this type of the cumulative exhaust gas flow is only adjusted by fuel after-injection if the products produced in the internal combustion engine from this additional fuel can be converted in or upstream of the exhaust gas aftertreatment device.

2. An operating method according to claim 1, **characterised in that** the mode of operation of the reformer is switched over from the lean-burn mode to the reformate mode as soon as combustible components supplied in the catalytic exhaust gas aftertreatment device can be independently oxidised with adequate reliability.

3. An operating method according to any one of the preceding claims, **characterised in that**, at least during reformer operation in the lean-burn mode, the hydrocarbons emitted by the internal combustion engine are intermediately stored in an HC adsorber connected upstream of the exhaust gas aftertreatment device.

4. An operating method according to any one of the preceding claims, **characterised in that**, for regeneration or to increase the temperature of a unit provided in the exhaust gas system, the reformer is put into operation and in the process is at least firstly operated in the lean-burn mode.

5. An operating method according to any one of the preceding claims, **characterised in that** the reformer is operated in the lean-burn mode in order to oxidise deposits from a previous reformate mode in the reformer and **in that** the operating mode of the reformer is switched from the lean-burn mode to the reformate mode as soon as deposits of this type are at least empirically substantially oxidised.

6. An operating method according to any one of the preceding claims, **characterised in that** the mode of operation of the reformer is switched from the lean-burn mode to the reformate mode if the reformer itself has heated up to such an extent that it can be operated with low emissions in the reformate mode.

## Revendications

1. Procédé de gestion d'un système composé d'un réformeur convertissant du carburant contenant des hydrocarbures, fourni en mode de réformation par un procédé de reforming en un gaz de reforming riche en hydrogène ainsi qu'un moteur à combustion interne dont la conduite des gaz d'échappement est équipée d'un dispositif de post-traitement catalytique des gaz d'échappement et qui pour accélérer l'établissement de la température de démarrage du catalyseur, reçoit les gaz générés par le réformeur,
- en cas de démarrage à froid du système du réformeur, après sa propre phase de démarrage, le réformeur fonctionne tout d'abord avec un mélange air/carburant maigre et ainsi il fonctionne non en mode de réformeur, mais en mode Lean-Burn,
procédé de gestion **caractérisé en ce que**
pendant le mode de fonctionnement du réformeur, en mode Lean-Burn, le moteur à combustion interne fonctionne de façon que les composants combustibles des gaz d'échappement du moteur à combustion interne peuvent réagir dans son installation de gaz d'échappement avec les gaz chauds générés par le réformeur et fournis en amont du dispositif de post-traitement des gaz d'échappement, et
(a) un moteur à combustion interne à allumage commandé, sans injection directe de carburant, fonctionne pendant le fonctionnement du réformeur, en mode Lean-Burn avec un mélange carburant/air modérément riche et la veine totale des gaz d'échappement passant dans le catalyseur du dispositif de post-traitement des gaz d'échappement et se composant des gaz générés dans le réformeur et des gaz d'échappement du moteur à combustion interne, présente essentiellement la composition des gaz d'échappement dégagés par la combustion d'un mélange stoechiométrique alors que,
(b) dans le cas d'un moteur à combustion interne à allumage commandé fonctionnant avec une injection directe de carburant, une telle composition stoechiométrique de la veine totale des gaz d'échappement par post-injection de carburant s'établit seulement si les produits provenant de ce carburant supplémentaire dans le moteur à combustion interne, sont transformés dans et en amont du dispositif de post-traitement des gaz d'échappement.

2. Procédé de gestion selon la revendication 1,
**caractérisé en ce que**
le mode de fonctionnement du réformeur est commuté du mode Lean-Burn au mode réformat dès que les composants combustibles fournis au dispositif de post-traitement catalytique des gaz d'échappement, peuvent être oxydés de manière indépendante avec suffisamment de sécurité.

3. Procédé de gestion selon l'une des revendications précédentes, **caractérisé en ce qu'**
au moins pendant le fonctionnement du réformeur en mode Lean-Burn, les hydrocarbures émis par le moteur à combustion interne, sont stockés de manière intermédiaire dans un adsorbeur d'hydrocarbures en amont du dispositif de post-traitement des gaz d'échappement.

4. Procédé de gestion selon l'une des revendications précédentes, **caractérisé en ce que**
pour régénérer ou pour augmenter la température d'une unité équipant l'installation des gaz d'échappement, on met en oeuvre le réformeur et on le fait tout d'abord fonctionner en mode Lean-Burn.

5. Procédé de gestion selon l'une des revendications précédentes, **caractérisé en ce qu'**
on fait fonctionner le réformeur en mode Lean-Burn pour oxyder les dépôts dans le réformeur provenant d'un mode réformat précédent, et
on commute le mode de fonctionnement du réformeur pour passer du mode Lean-Burn au mode réformat dès que par expérience ces dépôts se sont au moins pratiquement oxydés.

6. Procédé de gestion selon l'une des revendications précédentes, **caractérisé en ce que**
le mode de fonctionnement du réformeur commute du mode Lean-Burn au mode réformat si le réformeur lui-même a été chauffé pour qu'il puisse fonctionner avec peu d'émissions en mode réformat.
